# FASCICULE DE BREVET EUROPEEN

(11) **EP 4 075 968 B1**
(45) Date de publication et mention de la délivrance du brevet: **15.11.2023**
(21) Numéro de dépôt: 20842254.3
(22) Date de dépôt: 16.12.2020
(51) Int. Cl.: A01M 1/20, A01M 29/12, A01K 1/00, A01K 13/00, A01K 27/00

(54) **DISPOSITIF PIEZOELECTRIQUE POUR LA DIFFUSION CIBLEE DE MATIERE ACTIVE CHEZ L'ANIMAL**
PIEZOELEKTRISCHES GERÄT ZUR GEZIELTEN DIFFUSION VON AKTIVEN SUBSTANZEN BEI TIEREN
PIEZOELECTRIC DEVICE FOR TARGETED DIFFUSION OF ACTIVE SUBSTANCES FOR ANIMALS

(30) Priorité: 16.12.2019 FR 1914545
(43) Date de publication de la demande: 26.10.2022
(73) Titulaire: AB7 Santé, 31450 Deyme (FR)
(72) Inventeur: CALMET, Christophe, 31520 Ramonville Saint Agne (FR); NGUYEN, David, 31400 Toulouse (FR); VILBERT, Arnaud, 31450 Baziège (FR)
(86) Numéro de dépôt international: PCT/FR2020/000278
(87) Numéro de publication internationale: WO 2021/123519

(56) Documents cités:
- EP-A2- 0 897 755
- WO-A1-00/51747
- WO-A2-2008/008459
- FR-A1- 2 625 646
- FR-A1- 2 879 482
- US-A- 4 627 385
- US-A1- 2018 303 066

## Description

L'invention se situe dans le domaine des dispositifs de diffusion, et plus particulièrement des dispositifs de diffusion aérosol de type nébuliseur ultrasonique dont la vibration à haute fréquence d'oscillation permet la diffusion de particules. L'invention concerne plus particulièrement un dispositif porté par un collier pour animal, équipé d'un système de diffusion de type piézoélectrique pouvant fonctionner de façon multidirectionnelle, même en cas de mouvements de l'animal à traiter.

De nombreux dispositifs de diffusion de substances actives existent sur le marché. La plupart de ces dispositifs sont des dispositifs « passifs » qui ne requièrent seulement que le mouvement de l'air ambiant afin de disperser un liquide dans l'environnement proche. D'autres appareils sont alimentés électriquement par une batterie ou via une prise d'alimentation électrique, ce dernier cas nécessite toutefois une alimentation par câble et est ainsi uniquement destiné au foyer, ou au mieux à l'habitacle d'un véhicule.

D'autres dispositifs de diffusion utilisent un transducteur ultrasonique afin de pulvériser une solution liquide d'actifs dans l'air, cependant il n'existe pas à ce jour de dispositif piézoélectrique fixé sur le collier d'un animal afin de traiter au mieux celui-ci à l'aide d'agents actifs, notamment répulsifs, apaisants, antibactériens ou antiseptiques et ce même en cas de mouvement de l'animal.

L'état de l'art fait état de dispositifs de diffusion qui fonctionnent par chauffage notamment pour les prises murales. Ces derniers présentent l'inconvénient d'altérer les actifs les plus sensibles à la température, c'est notamment le cas des huiles essentielles. Pour abaisser la température d'utilisation des prises murales, il est connu de formuler les actifs avec des solvants, dont notamment ceux de type naphta très volatiles. Cela a pour conséquence d'une part de diluer le traitement, d'autre part de libérer un solvant organique dans l'environnement potentiellement toxique et inflammable, ce qui est non souhaitable.

Dans les dispositifs pour animaux, le traitement répulsif se fait le plus souvent par l'utilisation de matrice polymère susceptible de libérer des substances ayant cet effet, ou encore par l'application de formulation pour pipette de type « spot-on », de shampoing ou de lotions à des fins anti-parasitaires par exemple. Les concentrations en actifs au sein des matrices polymères ont tendance à diminuer dans le temps, le dosage et la diffusion d'un actif ne sont donc pas linéaires pendant toute la durée d'utilisation. Les actifs dits apaisants, antibactériens ou antiseptiques, sont quant à eux réservés dans la majorité des cas à des diffuseurs thermiques qui vaporisent l'actif dans l'air ambiant environnant, ceci convenant alors très bien aux animaux d'appartements. Mais dans le cadre d'une application d'actifs répulsifs et/ou apaisants, il n'existe pas de solution pratique permettant d'allier les caractéristiques d'une nébulisation d'une solution d'actifs à l'aspect d'un traitement ciblé et localisé des applications préexistantes.

Parmi les solutions localisées, on connaît des dispositifs aérosols pneumatiques, mais ces derniers ne sont pas forcément les plus adaptés car l'actif est libéré via des gaz propulseurs qui peuvent être inflammables voire toxiques à haute dose. De façon similaire au cas des matrices polymères, un autre inconvénient réside en ce que la quantité d'actif diffusée ne reste pas constante dans la durée d'utilisation du dispositif aérosol. En effet, le gaz propulseur diminue et entraine de moins en moins d'actif au fur et à mesure du nombre des utilisations. De plus, les dispositifs aérosols pneumatiques exigent une dilution des actifs incorporés, limitant donc la concentration utilisable et par conséquent, l'efficacité.

Parmi les diffuseurs portés par un animal, on peut citer notamment les brevets US4627385, US8714113 et US5927233 qui décrivent des boîtiers destinés à être fixés sur un collier pour dissuader un chien d'aboyer. Pour ce faire, le diffuseur est capable de délivrer, en réponse au bruit de l'aboiement, un choc électrique via des électrodes, ou bien des signaux sonores, ou encore un signal olfactif obtenu par la pulvérisation d'huile essentielle de citronnelle stockée dans un réservoir intégré dans le boîtier. Le réservoir est pourvu d'une électrovanne dont l'ouverture est commandée électroniquement. Ces brevets ne divulguent ni ne suggèrent la fixation d'un système piézoélectrique à un collier en vue d'une utilisation dans le traitement des parasites ou d'autres nuisibles.

Concernant les dispositifs appliqués à l'animal, il est connu par la demande WO1993013730A1 des inhalateurs thérapeutiques pour bovins. Ce type d'inhalateur comporte un système de diffusion piézoélectrique couplé à un masque respiratoire capable de pulvériser des substances thérapeutiques afin de les acheminer via un tuyau reliant masque et dispositif. Il s'agit d'une méthode d'aérosolthérapie employée en cas d'urgence vitale chez l'animal concerné et qui permet d'éviter la diffusion des substances thérapeutiques dans l'air environnant. Ce système est voué à être utilisé sur l'animal en détresse respiratoire et donc immobile lors du traitement ponctuel. Ce document ne divulgue aucunement une utilisation d'un dispositif piézoélectrique fixé à un collier pour une utilisation à la demande et chez un animal en mouvement. De façon plus générale dans l'art antérieur, les traitements d'aérosolthérapie sont mal supportés par les animaux auxquels un masque contraignant doit est appliqué. Rien dans l'art antérieur n'est proposé pour améliorer les dispositifs d'aérosolthérapies chez l'animal.

On connaît de la demande EP0897755A2 une invention qui a trait à un appareil piézo-électrique de pulvérisation de liquide et à un procédé pour repousser ou éliminer les organismes nuisibles. Le présent brevet divulgue une méthode pour éliminer et repousser les insectes en émettant dans l'air des particules d'insecticides atomisées. Le liquide est atomisé par la vibration engendrée par un signal électrique et n'a pas besoin de réservoir sous pression gaz. Cette méthode permet la réduction de la taille du système. La taille des particules atomisées est de moins de 20µm. La quantité d'ingrédients actifs atomisés est de 0.01 to 20mg/h/m3. Ce document divulgue un procédé de répulsion et d'élimination d'insectes nuisibles par nébulisation d'au moins une substance active. Les actifs peuvent être utilisés seuls ou en mélange et sont de type actif chimique. Cette demande ne divulgue pas de dispositif ultrasonique fixé à un collier sur un animal en mouvement ni de traitements à base de phéromones ou d'huiles essentielles.

Le document EP2797411 B1 divulgue un dispositif d'atomisation ultrasonique comprenant un réservoir de solution contenant un ingrédient pour le contrôle de parasites choisi dans le groupe des methofluthrine. Mais ce document ne divulgue pas spécifiquement l'utilisation d'un dispositif piézoélectrique fixé à un collier, ni de traitement apaisant.

D'autre part, le brevet US9185884B2 divulgue un collier de contrôle pour animaux. Ce collier comporte un diffuseur d'odeur. Il ne mentionne toutefois aucun dispositif piézoélectrique, ni ne fait mention de diffusion d'actifs .

Le Brevet US8741965 divulgue quant à lui une méthode de modification du comportement d'un animal, notamment lors d'un stress de manière à apaiser celui-ci. Pour cela, l'invention consiste à utiliser des phéromones apaisantes, sous forme de solution à pulvériser ou sous forme d'actif intégré à une matrice polymère susceptible d'être porté par l'animal. Mais ce document ne mentionne aucunement un dispositif piézoélectrique fixé à un collier pour la diffusion d'actifs.

Le document US 2018/303066 A1 décrit un collier pour un animal avec un dispositif rechargeable de pulvérisation d'un actif. Le dispositif est fixé sur le collier d'un animal et comprend un réservoir amovible contenant au moins ledit actif, un corps de nébulisation contenant un mécanisme de pulvérisation et un joint assurant l'étanchéité entre ledit réservoir et ledit corps de nébulisation. Un autre collier pour un animal avec un dispositif rechargeable de pulvérisation d'un actif est connu du document FR 2 625 646 A1.

Au vu de l'art antérieur, il existe un besoin de proposer des dispositifs piézoélectriques adaptés pour être disposés autour du cou de l'animal et permettant un traitement localisé et/ou dans une direction donnée afin de mieux cibler la zone à traiter.

Par ailleurs, il existe également un besoin de proposer un dispositif pouvant fonctionner de façon multidirectionnelle, peu importe le positionnement du dispositif, permettant un fonctionnement même sur un animal en mouvement. Par multidirectionnel, on entend un dispositif pouvant pulvériser de façon efficace un actif peu importe l'orientation du dispositif et les mouvements qui lui sont imposés.

Afin d'atteindre les objectifs mentionnés, il existe donc un besoin d'alléger, de miniaturiser et d'améliorer les systèmes de pulvérisation d'actifs.

Le dispositif selon l'invention se propose de répondre à ces différents besoins.

L'invention a pour objet un collier pour un animal avec un dispositif rechargeable de pulvérisation d'un actif selon la revendication 1 et une utilisation d'un tel collier selon la revendication 9. D'autres caractéristiques optionnelles sont déclinées dans les revendications dépendantes.

Un autre intérêt de l'invention au regard des autres systèmes de diffusion repose sur l'emploi d'un dispositif piézoélectrique qui permet de s'affranchir des solvants potentiellement dangereux et des gaz propulseurs inflammables.

Par ailleurs, le dispositif piézoélectrique selon l'invention offre la possibilité d'utiliser indifféremment des actifs purs ou dilués, offrant ainsi une possibilité d'utilisation de plages de concentrations d'actifs plus larges qu'avec les dispositifs pneumatiques de l'état de l'art. Il est ainsi plus aisé de proposer une gamme de valeurs adaptée à l'efficacité recherchée. Les actifs répulsifs pourront ainsi le cas échéant être utilisés purs ou très concentrés en solution si nécessaire. De même les actifs apaisants, pourront être utilisés de façon très diluée sans en altérer la pulvérisation. De plus, le système piézoélectrique selon l'invention offre l'avantage de maintenir stable la concentration d'actifs, au cours du temps et du nombre d'utilisation.

Les systèmes de diffusion piézoélectriques de l'invention permettent également de limiter les pertes d'actifs fragiles tels que les huiles essentielles notamment à cause de leur sensibilité à la chaleur. En effet lesdits dispositifs ne produisent pas de chaleur en fonctionnement et sont donc à privilégier pour les actifs thermosensibles.

Les moyens de traitements par pulvérisation connus actuellement ne permettent pas un dosage contrôlé des actifs de manière précise. Lorsqu'il s'agit de traiter l'animal, il peut s'avérer nécessaire de bénéficier d'un dispositif permettant une régulation précise des doses à administrer tout en permettant un traitement en mouvement et de manière localisée. Ce que permet le système piézoélectrique selon l'invention.

La présente invention permet de remplir les objectifs susmentionnés et de palier les inconvénients des dispositifs de l'état de l'art.

Lorsqu'un animal court ou se promène, les systèmes classiques, y compris les systèmes piézoélectriques ne permettent pas un fonctionnement du dispositif en mouvement et notamment dans tous les sens que le mouvement de l'animal impose au dispositif. De plus les systèmes classiques de diffusion n'offrent pas la possibilité de diffuser de façon ciblée, localisée vers une zone ou une autre spécifique à traiter. Or il est utile de pouvoir faire porter à l'animal en permanence un dispositif activable quand nécessaire.

Dans le cas d'un animal anxieux ou excité, il peut s'avérer nécessaire de l'apaiser rapidement en diffusant l'actif adapté. Dans ce cas, il est important de pouvoir cibler la sphère Otho-Rhino-Laryngée (ORL).

A contrario, lorsque l'animal souffre de démangeaisons et se gratte par exemple au niveau du poitrail, il sera alors plus judicieux de pulvériser un jet anti-démangeaison, répulsif voire insecticide vers le corps de l'animal afin de le soulager ou de le traiter. Ainsi il convient de disposer d'un dispositif portatif qui satisfasse à ces problèmes de modularités de pulvérisation, d'orientation du jet et de mobilité d'un tel dispositif.

Le but de la présente demande est de proposer un nouveau dispositif piézoélectrique, et une nouvelle application de ce dispositif chez l'animal.

Par animal, on entend tout animal susceptible de porter un dispositif tel que décrit dans la présente invention. Préférentiellement, par animal on entend l'animal domestique tel que le chat, le chien ou le cheval.

Un objectif de la présente invention est de proposer un dispositif piézoélectrique, et son utilisation pour la diffusion d'actifs, notamment anti-nuisibles, apaisants ou anti-douleur, disposé au voisinage du cou d'un animal, qui soit capable d'atteindre efficacement les zones du corps de prédilection du traitement. Par exemple dans le cas particulier de produits anti-nuisibles, il peut s'agir notamment du ventre, du poitrail, des pattes et des flancs. Il est en effet connu que les voies d'infestation des tiques par exemple sont les pattes, pour atteindre les parties inférieures de l'animal de compagnie. Pour la diffusion d'actif apaisant, anti-stress, il sera préférable de diffuser vers la sphère ORL pour permettre l'inhalation de l'actif. Pour la diffusion d'actif anti-douleur, le dispositif peut être dirigé vers toute zone du corps à traiter, par exemple le dos.

Un autre objectif est de fournir un dispositif automatisé capable de diffuser des particules refermant les matières actives d'une taille permettant la réalisation d'un nuage ou de brouillard à destination des zones d'intérêt du corps de l'animal, ou de façon à ce que les actifs soient aptes à être inhalés.

Il est évident que la réalisation du dispositif selon l'invention tient compte des contraintes techniques liées à la miniaturisation, à la stabilité de l'actif dans le liquide ainsi que son efficacité sur les cibles, à la praticité tant pour l'animal que pour son maître. En effet, le port du dispositif ne doit pas gêner ni inciter l'animal à le retirer.

Par conséquent, la présente invention a pour objet un dispositif rechargeable de pulvérisation comprenant un réservoir contenant au moins un actif, ledit dispositif étant équipé d'un mécanisme de pulvérisation piézo-électrique permettant de pulvériser de façon contrôlée et à distance ledit actif, caractérisé en ce que ledit dispositif est fixé sur le collier d'un animal.

La présente invention concerne également l'utilisation dudit dispositif caractérisé en ce qu'il est fixé sur le collier de l'animal et utilisable de façon multidirectionnelle indépendamment des mouvements de l'animal. Par utilisable de façon multidirectionnelle on entend que le système piézoélectrique reste activable pour la diffusion de l'actif peu importe le mouvement ou la position de l'animal et donc du dispositif porté. Que l'animal soit debout, couché, immobile ou en mouvement le dispositif selon l'invention, qu'il soit positionné à l'horizontale, à la verticale ou « tête en bas » reste fonctionnel et permet de diffuser l'actif efficacement.

Par dispositif rechargeable il est entendu que le dispositif puisse, par des moyens connus de l'homme du métier, être rempli à nouveau après utilisation lorsque le réservoir est vide. Le réservoir peut, à ce titre, être inclus sous forme de cartouche à changer, ou comporter une valve de remplissage directement intégrée en surface du réservoir.

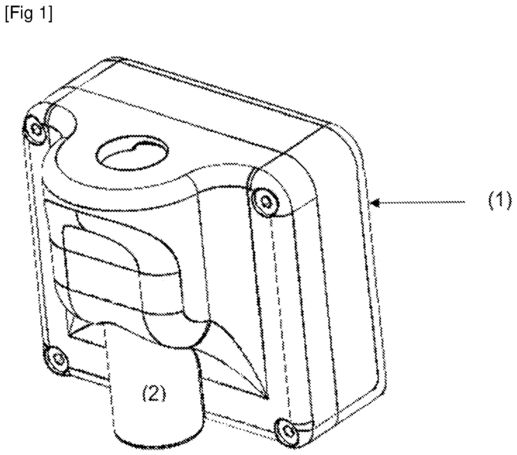

Le dispositif selon l'invention est constitué d'un corps de nébulisation (1) et d'un réservoir (2) tel que décrit à la Figure 1. Le corps de nébulisation comprend le boitier renfermant le système d'étanchéité, le système piézoélectrique, la carte électronique ainsi que la batterie alimentant le système. Dans un mode particulier, le corps de nébulisation peut être équipé d'un mécanisme d'orientation du système piézoélectrique permettant d'obtenir une pulvérisation dans des directions définies. Dans la suite de la demande, le réservoir du dispositif selon l'invention sera défini indifféremment comme un réservoir ou une « cartouche », ladite cartouche pourra être, de manière indifférenciée, une cartouche remplissable et réutilisable ou encore une cartouche jetable après utilisation.

Dans un mode de réalisation préférée, le réservoir (2) est une cartouche (3) comportant une mèche (4) à imbiber, de longueur choisie en fonction de la taille du réservoir qui est assimilable à une cartouche sensiblement cylindrique. Cette mèche est insérée longitudinalement au sein de la cartouche cylindrique qui comporte une ouverture de distribution à une de ses extrémités et un fond à une autre. L'ouverture de distribution comporte un diamètre inférieur au diamètre du cylindre et est prévu pour accueillir la mèche. Ladite mèche comble donc l'espace en sortie de la cartouche et dépasse de celle-ci. L'adéquation entre le diamètre de la mèche et celle de l'ouverture du réservoir permet avantageusement d'éviter les écoulements superflus et non voulus provoqués par les contraintes du mouvement et donc d'assurer une première étanchéité entre mèche et ouverture de distribution.

Préférentiellement, la mèche est souple et constituée en fibres tissées de type cellulose ou dérivés, traitée hydrophobe ou non. Dans un autre mode, la mèche peut être rigide en matériau poreux de type céramique ou plastique. L'homme du métier adaptera la nature de la mèche à celle de l'actif à véhiculer.

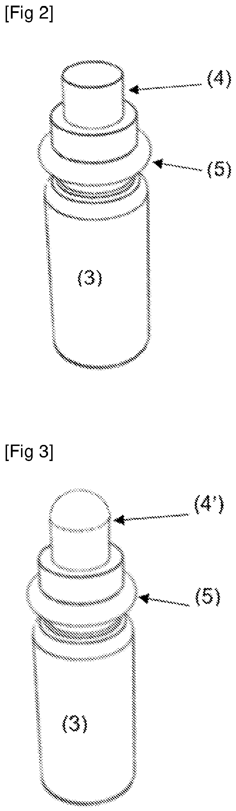

Dans le dispositif selon l'invention, la mèche est de forme cylindrique dont les extrémités sont des surfaces planes tel que décrit à la Figure 2. La pastille piézoélectrique est alors en contact avec toute la surface plane de la mèche. Dans ce mode l'émission du brouillard se fera dans une unique direction, perpendiculairement à la surface de la mèche.

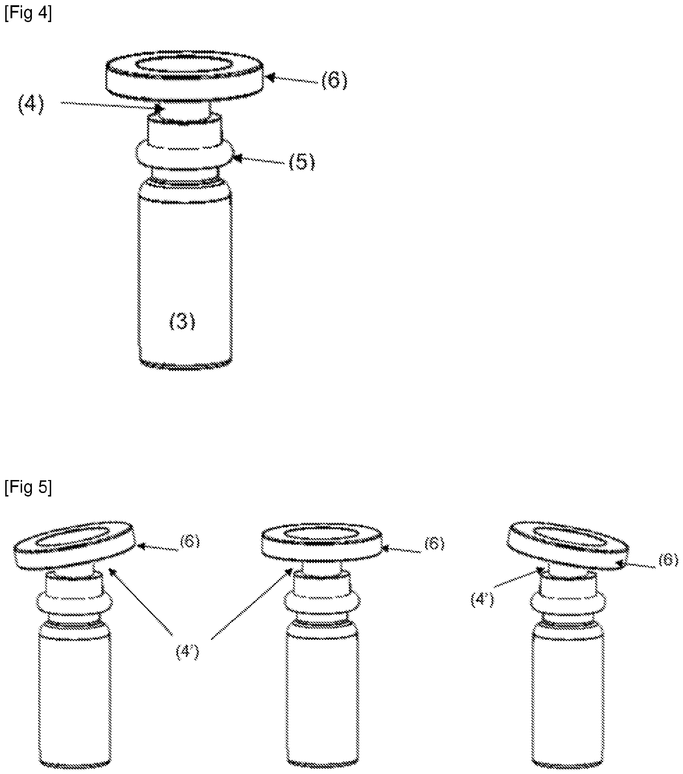

Dans un mode alternatif, la surface de la mèche en contact avec la pastille piézoélectrique est de forme arrondie, sous forme d'ogive ou préférentiellement hémisphérique. Dans cette variante, le dispositif selon l'invention présente l'avantage de permettre l'orientation à la demande de la pastille piézoélectrique en contact avec la mèche. Par ailleurs, cette forme maintient un contact régulier avec le centre de la membrane perforée située sur la pastille piézoélectrique quelle que soit l'orientation de cette dernière. Ceci permet un approvisionnement du liquide vers la cellule piézoélectrique constant et en quantité suffisante tout en diminuant les tensions sur la pastille, composante fragile du système. Par cette variante, le dispositif permet de modifier l'orientation de la pastille piézoélectrique et donc de définir une direction spécifique choisie pour la pulvérisation en fonction de l'indication (Figure 5).

Dans un mode particulier, le mécanisme d'orientation de ce mode de réalisation comporte alors un mécanisme de type rotule (7) pour permettre le pivotement du système piézoélectrique autour de l'axe vertical du corps de nébulisation (1). Ce mécanisme permet non seulement d'orienter de manière plus précise la nébulisation vers les zones ciblées mais il permet également de sécuriser les risques d'épanchement accidentels du liquide contenu dans le réservoir (2) du dispositif lors des mouvements, ce qui contribue également à renforcer l'étanchéité du système. L'utilisation d'une telle rotule pour le mécanisme d'orientation permet également de simplifier la miniaturisation du dispositif afin de le rendre compact et plus adéquat pour qu'il puisse être utilisée sur l'animal mobile.

Le système d'orientation (7) de la pastille piézoélectrique repose sur une liaison de type rotule entre deux parties distinctes. On trouve alors une partie mobile (8') de forme sphérique ou hémisphérique, support de la pastille piézo-électrique et de son joint d'étanchéité spécifique, mais aussi une partie fixe (8) préférentiellement de forme hémisphérique, constituant le châssis dans lequel est enchâssée la partie mobile pour permettre la rotation de cette dernière afin d'orienter la nébulisation en sortie du dispositif.

L'angle et la direction du traitement sont définis par ledit mécanisme et dépendent de l'application visée. L'angle d'orientation maximal de la pastille (6) par le système d'orientation (7) est de 45°C par rapport à l'axe de la mèche (4 ou 4') et ceci dans toutes les directions. L'inclinaison de la pastille sur la mèche est ainsi limitée à 45° afin d'assurer le contact permanent et optimal et la mèche (4 ou 4') avec la pastille piézoélectrique (6).

Il est possible de compléter ce mécanisme par un verrouillage de l'angle, soit par un mécanisme complémentaire de crantage, soit par un traitement spécifique des surfaces en contact pour contrôler leur rugosité.

Dans un mode de réalisation où la mèche du dispositif reste à la verticale, le mécanisme d'orientation (7) de la pastille piézoélectrique (6) permet avantageusement de diriger la pulvérisation dans une direction choisie sans avoir à incliner le dispositif et par conséquent de maintenir l'imprégnation optimale de la mèche (4 ou 4') même dans le cas de réservoirs partiellement vide ou inclinés, afin d'assurer la continuité de l'alimentation en liquide jusqu'à consommation complète de ce dernier. Ce problème est fréquemment rencontré dans les dispositifs à spray munis d'un tube plongeur, qui lorsque le réservoir est vide, ne peuvent plus pulvériser lors qu'ils sont inclinés. La présente invention palie ainsi cet inconvénient, de volume mort ou accessible au tube plongeur.

Selon un mode préféré, l'étanchéité entre le réservoir (2) et le corps de nébulisation (1) est assurée par un système de joint (5) particulièrement adapté au dispositif selon l'invention. Le joint sera de préférence de forme torique, dans une matière élastique choisie parmi les matériaux comme le caoutchouc butadiène acrylonitrile, le caoutchouc fluoré, le caoutchouc fluorosilicone, le polyacrylate, le caoutchouc d'Ethylène Acrylate, le caoutchouc perfluoré, le silicone, l'EPDM, le copolymère d'Ethylène Propylène Fluoré, le polytrétrafluoroéthylène, ou le polyuréthane. Le joint sera choisi parmi ceux présentant une dureté comprise entre 50 et 100 shore A pour permettre à la fois le changement facilité de réservoir mais aussi la bonne tenue mécanique de la recharge une fois insérée. Ce système de joint prend place dans une gorge spécialement adaptée de manière à assurer l'étanchéité et un positionnement optimisé de la cartouche de recharge lors des sollicitations mécaniques induites lors de la recharge du dispositif ou lors des mouvements de l'animal.

Au sens de l'invention, le réservoir ou la cartouche peuvent être constitués dans des matériaux classiquement utilisés, connus tels que le verre, le plastique ou tout autre matériau que l'homme du métier jugera adapté à l'invention.

Il est entendu que l'actif sera préalablement mis en place dans la cartouche avant l'insertion de la mèche. Celui-ci pourra alors diffuser de la cartouche vers l'ouverture de distribution en passant par la mèche par un phénomène de capillarité.

De manière avantageuse la mise en contact de l'actif avec l'élément piézo-électrique (6) se fera par transport de l'actif par capillarité le long de la mèche jusqu'à son extrémité. L'actif pourra ainsi être nébulisé sous forme de nuage de particules. Il est entendu au sens de l'invention que les particules sont des gouttelettes d'une solution liquide.

Le système piézoélectrique selon l'invention permet également une certaine modularité au niveau des concentrations d'actifs pouvant être utilisées contrairement aux systèmes pneumatiques sous pression. En effet le dispositif de la présente invention permet de manière surprenante de travailler avec des compositions très concentrées d'actifs, voire avec les actifs purs, donc sans utiliser de solvants, et ainsi de gagner en efficacité lors de l'utilisation d'actifs dose-dépendants.

Dans un mode particulier selon l'invention, l'actif est une substance formulée au sein d'une composition liquide afin qu'elle puisse entrer en contact avec le dispositif piézoélectrique dont la fréquence de vibration va permettre d'atomiser le liquide et de disperser ladite substance sous forme de nuage ou de brume.

Selon la présente invention, la composition liquide contenant l'actif est de type aqueuse, alcoolique, hydroalcoolique, huileuse ou sous forme d'émulsion, dont la nature sera adaptée à l'actif. Selon un mode de réalisation particulier, la composition est exclusivement composée de l'actif pur, sans solvant. Selon un autre mode de réalisation, l'actif est dilué au sein de la composition au moyen d'au moins un solvant.

De manière connue, les matières actives sont formulées dans un solvant approprié. Des exemples de solvants utilisables comprennent notamment des hydrocarbures aromatiques ou aliphatiques, des hydrocarbures halogénés, des alcools aromatiques ou aliphatiques, des esters, des éthers et des cétones, ou de l'eau. Plus préférentiellement, les solvants utilisables sont des triglycérides, tels les huiles végétales ou animales, ou des solvants alcooliques, tel l'éthanol.

Des adjuvants de formulation, bien connus dans le domaine, peuvent également être ajoutés tels que, par exemple, des stabilisants, des tensioactifs, des agents synergisants, des agents antimicrobiens.

Dans une variante préférée, l'actif selon la présente invention représente entre 0,01 % et 100% de la composition liquide, préférentiellement entre 0,1 % et 50 % et encore plus préférentiellement entre 0,5 % et 30%.

Selon un mode de réalisation, l'actif est choisi parmi un insecticide, un répulsif, un agent odoriférant, un antistress, un agent dynamisant, un agent cosmétique d'entretien des poils, un agent anti-démangeaison, un actif pour le traitement des maladies respiratoires, un antidouleur, ou leurs mélanges.

Les insecticides et répulsifs de la présente invention sont connus de l'homme du métier, ils sont classiquement utilisés dans la lutte contre les organismes nuisibles précités. Par exemple, les insecticides et les répulsifs sont choisis notamment dans le groupe formé par des pyréthrinoïdes, des pyréthrines et leurs dérivés, des carbamates, des formamidines, des esters carboxyliques, le N,N-diéthyl-3-méthylbenzamide (DEET), l'Icaridine, des phénylpyrazoles, des composés organophosphorés, des composés organohalogénés, des néonicotinoïdes, des avermectines et leurs dérivés, des spinosynes, des huiles essentielles et leurs constituants (exemples : les terpènes et leurs dérivés (alcools, esters, aldéhydes), des sesquiterpènes et leurs dérivés (alcools, esters, aldéhydes)).

Dans une variante de réalisation préférée, l'agent actif est un répulsif ou un insecticide qui est choisi parmi les huiles essentielles telles que l'huile essentielle de lavandin, l'huile essentielle d'eucalyptus citronnée, de citronnelle, de lavande, de margousier, de menthe poivrée, de menthe verte, de menthe pouliot, de gaulthérie ou de basilic ou leur mélange.

Selon une variante de l'invention, les répulsifs sont choisis parmi les constituants d'huiles essentielles tels que le géraniol, le limonène, le menthol, l'alpha pinène, le linalol, le citriodiol, le citronellal ou leur mélange.

L'agent odoriférant peut être d'origine naturelle ou de synthèse et, est choisi parmi les parfums, les arômes, les huiles essentielles et leurs constituants.

L'antistress ou l'agent apaisant peut être une huile végétale telle que l'huile de chanvre, notamment riche en cannabinoïdes, ou une huile essentielle telle que l'huile essentielle de valériane, de nepeta cataria, de pin, de mandarine, de bigaradier, de verveine, de ravintsara, de camomille, de lavande, de marjolaine, d'Ylang-ylang, de romarin, d'eucalyptus ou de menthe ou une phéromone ou leurs mélanges.

L'agent anti-démangeaison peut être une huile essentielle, un alcool gras, un ester, un acide gras et ses esters, des vitamines ou leurs mélanges.

L'agent cosmétique d'entretien des poils peut être un corps gras comme des alcools, des esters, des huiles végétales, des glycérides, des acides, des céramides, ou encore des vitamines.

Par actif pour le traitement des maladies respiratoires, on entend tout actif qui peut traiter les pathologies respiratoires des voies aériennes de l'animal ou les voies nasales, de type asthme ou bronchite chronique. L'actif peut être choisi parmi un corticoïde, un broncho-dilatateur, un fluidifiant bronchique, un antihistaminique ou tout autre traitement adapté à la pathologie.

L'antidouleur peut être une huile essentielle, des alcools monoterpéniques, des aldéhydes monoterpéniques, des esters monoterpéniques ou leurs mélanges, des dérivés cannabinoïdes préférentiellement sans THC notamment issus de l'huile de chanvre. On préférera tout particulièrement l'emploi du méthyl salicylate, du menthol, de l'huile essentielle de gaulthérie, de genévrier, de menthe poivrée, d'eucalyptus citronné ou de l'huile de chanvre.

Les antibactériens et/ou antiseptiques, peuvent êtres des huiles essentielles, des alcools monoterpéniques, des aldéhydes monoterpéniques, des esters monoterpéniques, ou des dérivés hydroalcooliques ou leurs mélanges. On préférera tout particulièrement le lavandin, l'huile essentielle de pamplemousse, de citron, d'arbre à thé, de marjolaine, d'eucalyptus radié, de ravintsara ou leurs mélanges.

Selon le but recherché, dans le cadre de l'invention, les matières actives susmentionnées peuvent être utilisées seules ou en association.

Le dispositif selon l'invention est donc également composé d'un élément piézoélectrique bien connu de l'homme de l'art. A titre d'exemple, ledit dispositif comprend notamment une pastille en céramique piézoélectrique mise en contact, avec la solution permettant de la nébuliser, via la mèche. La pastille piézoélectrique est recouverte d'une membrane perforée dont les dimensions des perforations peuvent varier de 1 à 40 µm, préférentiellement de 3-20 µm. Lorsqu'elle est activée, la pastille vibre à une fréquence comprise entre 75 et 190 kHz. La taille des perforations et la fréquence de vibration permet de cibler une taille de particule à nébuliser selon l'invention.

Selon la présente invention, la composition liquide est pulvérisée sous forme de particules de diamètre moyen compris entre 1µm et 40µm. La taille des particules est adaptée à l'utilisation qui sera visée. Celle-ci est modulée d'une part avec la fréquence d'oscillation de vibration de la pastille piézoélectrique du dispositif selon l'invention. D'autre part, la taille des particules pulvérisées sera dépendante de la taille des microperforations de la membrane du dispositif piézoélectrique.

Selon un mode particulier, dans le cas de diffusion d'actifs contre les nuisibles, la composition de l'actif sera préférentiellement pulvérisée dans une taille de particule comprise entre 10 à 40µm, de façon plus préférentielle entre 20 et 40µm.

Dans un mode de réalisation préféré, lorsque l'actif est une solution liquide d'agents apaisants, anti-douleur ou actif pour le traitement des maladies respiratoires, il convient alors de cibler de manière privilégiée la sphère Otho Rhyno Laryngée. Il est nécessaire que la pulvérisation se fasse préférentiellement vers le museau ou le système olfactif de l'animal afin d'atteindre l'organe cible, et de permettre l'inhalation des actifs. Il convient donc de nébuliser la solution d'actif apaisant dans un diamètre de gouttes adaptées à l'inhalation. Lesdites gouttes générées par le dispositif selon l'invention ont un diamètre compris entre 1µm et 20µm pour permettre une inhalation optimale, préférentiellement entre 1 et 10µm.

Au sens de la présente demande, les actifs purs ou formulations contenant le ou les actifs doivent être intégrées au réservoir du dispositif tel que décrit précédemment. L'utilisation du dispositif doit pouvoir se faire sur un animal en mouvement et dans toutes les directions. Ainsi il convient que ledit dispositif soit fixé sur l'animal au moyen d'un harnais ou collier, préférentiellement un collier et que le dispositif puisse être amovible.

Les moyens de fixations du dispositif selon l'invention sont choisis parmi un système de ruban auto-agrippant, de lacet, d'adhésif, par un système de bouton de pression, par encoche ou tout autre moyen de fixation bien connu de l'homme du métier.

Dans un mode particulièrement avantageux, le moyen de fixation peut permettre de modifier l'orientation et la pulvérisation en fonction de l'effet recherché. A cet effet, il est également prévu que le dispositif selon l'invention puisse bénéficier d'un système d'attache rotative ou orientable fixée au collier. Dans un tel mode de réalisation particulier, les moyens de fixations sont montés sur une attache rotative clipsée au collier. Le dispositif piézoélectrique sera fixé sur un support rotatif qui pourra alors assurer une diffusion des actifs à 360 degrés. Dans un mode particulier de pulvérisation d'actifs répulsifs ou insecticides, la pulvérisation est préférentiellement orientée vers le buste, les flancs de l'animal, et/ou les parties basses du corps de l'animal. Dans le cas d'apaisant, et/ou d'anti douleur, la pulvérisation sera préférentiellement dirigée vers la sphère ORL pour inhalation.

Selon la présente invention, l'utilisation du dispositif présente donc l'avantage de générer une pulvérisation dans différentes directions choisies. D'une part, le dispositif selon l'invention permet un fonctionnement dans tous les sens et peut être orienté en fonction des zones à atteindre, notamment via son moyen de fixation sur le collier. D'autre part, l'utilisation d'une mèche à extrémité hémisphérique au sein du dispositif, permet d'orienter dans une direction donnée la pastille piézoélectrique en contact avec ladite mèche.

Selon la présente invention, le mécanisme de pulvérisation piézoélectrique du dispositif comprend une carte électronique. Ladite carte électronique permet l'activation du système piézoélectrique. Selon un mode particulier l'activation peut se faire par un bouton poussoir directement et manuellement sur le dispositif. Dans un mode préférentiel, la carte électronique permet de contrôler et/ou de déclencher la pulvérisation à distance. Dans un mode particulier, le déclenchement est réalisé par le biais d'une programmation, pouvant définir les jours et/ou heures et/ou temps de pulvérisation. Dans une autre variante, le déclenchement est réalisé à la demande par l'intermédiaire d'une télécommande. L'homme du métier adaptera le système d'activation à distance adéquate au dispositif selon l'invention.

L'invention concerne donc un dispositif rechargeable de pulvérisation d'un actif comprenant : un réservoir amovible contenant une mèche et au moins un actif, un corps de nébulisation contenant un mécanisme de pulvérisation piézoélectrique, un joint assurant l'étanchéité entre ledit réservoir et ledit corps de nébulisation, caractérisé en ce que le dispositif est fixé sur ou dans le collier d'un animal.

L'invention concerne ledit dispositif caractérisé en ce qu'il peut être orienté dans de multiples directions.

Le dispositif selon l'invention est caractérisé en ce que le mécanisme de pulvérisation piézoélectrique comprend une pastille piézoélectrique en contact avec l'actif, ladite pastille vibrant à une fréquence comprise entre 75 et 190 kHz et est recouverte d'une membrane perforée dont les dimensions des perforations sont comprises entre 1 et 40 µm.

Le dispositif selon l'invention est caractérisé en ce que la pastille piézoélectrique est en contact avec une mèche dont l'extrémité est plane ou hémisphérique.

Le dispositif selon l'invention est caractérisé en ce que l'actif est un actif insecticide, répulsif, anti-douleur ou apaisant et représente 0,01 % à 100 % en masse d'une composition liquide.

Le dispositif selon l'invention est caractérisé en ce que la composition liquide est pulvérisée sous forme de particules de diamètre moyen compris entre 1µm et 40µm.

L'invention concerne donc un dispositif rechargeable de pulvérisation comprenant : (a) un réservoir amovible contenant au moins un actif, (b) un mécanisme de pulvérisation piézo-électrique comprenant un élément piézoélectrique piloté par une carte électronique (c) caractérisé en ce que ledit dispositif est fixé sur ou dans le collier d'un animal. Ledit réservoir comprend une ouverture de distribution par laquelle une mèche permet de vectoriser l'actif vers l'élément piézo-électrique quel que soit le sens d'utilisation du dispositif. L'étanchéité de l'ensemble est assurée par un système de joint entre le réservoir et le corps de nébulisation du dispositif, choisi pour permettre le changement de réservoir ou cartouche de recharge.

L'invention concerne également l'utilisation d'un dispositif rechargeable de pulvérisation d'un actif comprenant un réservoir contenant au moins ledit actif, et un mécanisme de pulvérisation piézo-électrique, caractérisé en ce que le dispositif est destiné à être fixé sur ou dans le collier d'un animal.

L'utilisation du dispositif est caractérisée en ce que le dispositif est utilisable de façon multidirectionnelle et indépendamment des mouvements de l'animal.

L'utilisation du dispositif est également caractérisée en ce que le dispositif permet de pulvériser l'actif de façon localisée sur une zone cible de l'animal.

L'utilisation du dispositif est caractérisée en ce que la composition liquide contenant l'actif est pulvérisée sous forme de particules de diamètre moyen compris entre 1µm et 40µm.

L'utilisation du dispositif est caractérisée en ce que la pulvérisation a pour cible la sphère Otho-Rhino-Laryngée de l'animal ou le ventre, le poitrail, les pattes ou les flancs de l'animal.

L'invention concerne donc l'utilisation d'un dispositif équipé d'un mécanisme de pulvérisation piézo-électrique permettant de pulvériser de façon contrôlée et à distance ledit actif.

Les figures 1 à 6 représentent un exemple de dispositif selon l'invention, sans en limiter la forme.
[Fig.1] représente un exemple de dispositif complet selon l'invention constitué des deux parties principales, à savoir, le corps du dispositif constituant le corps de nébulisation (1) et le réservoir (2) emboité au sein du corps de nébulisation (1)
[Fig.2] représente le réservoir (2) constitué de la partie cartouche (3) contenant l'actif ou la composition comprenant l'actif, au sein duquel est fixée une mèche (4) à extrémité plane. Un joint (5) permet d'assurer l'étanchéité entre le réservoir et le corps de nébulisation lorsque le réservoir est en place au sein du dispositif.
[Fig.3] représente une alternative au réservoir (2) constitué de la partie cartouche (3) contenant l'actif ou la composition comprenant l'actif, au sein duquel est fixée une autre variante de mèche (4') présentant une extrémité arrondie, hémisphérique.
[Fig.4] et [Fig.5] représentent le réservoir avec la pastille piézoélectrique (6) en place telle qu'elle est disposée dans l'élément du corps de nébulisation.
[Fig.4] représente le cas où la cellule piézoélectrique (6) est placée sur une mèche à extrémité plane (4).
[Fig.5] représente le cas où la cellule piézoélectrique (6) est placée sur une mèche à extrémité hémisphérique (4') permettant d'orienter la cellule pour diriger la pulvérisation dans une direction choisie.

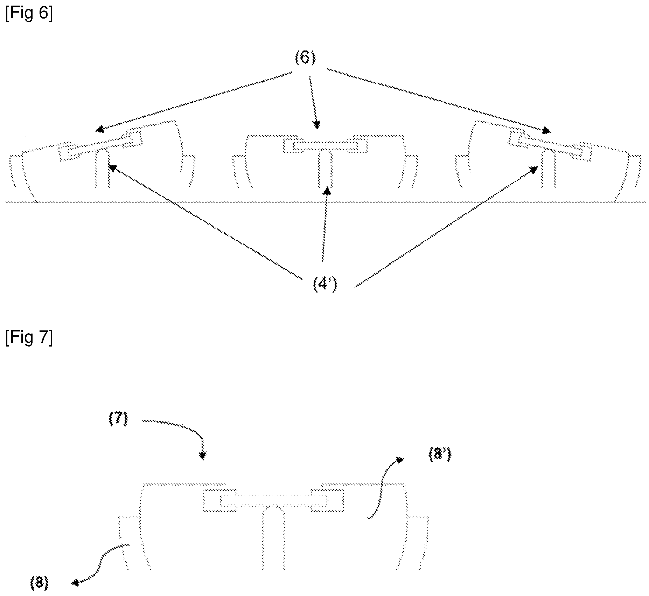

[Fig.6] représente un agrandissement du système d'orientation de la pastille piézoélectrique (6) lorsque celle-ci est en contact avec l'actif via une mèche hémisphérique (4'). Dans ce mode particulier, la pastille piézoélectrique est enchâssée dans un système basculant permettant de choisir une orientation à donner à la pastille piézoélectrique dirigeant ainsi la pulvérisation dans la direction souhaitée.
Fig.7] représente le système d'orientation de la pastille piézoélectrique et notamment le détail du mécanisme de type rotule (7) constitué d'une partie fixe (8) et d'une partie mobile (8') enchâssée dans ladite partie fixe (8).

La présente invention est illustrée au moyen des exemples non exhaustifs et non limitatifs suivants :

### Exemple 1 : Dispositif de diffusion d'actif anti-tiques et puces pour chien

On a réalisé un prototype de dispositif pour la diffusion de matière active anti-tiques et puces. Le dispositif est constitué par l'ensemble comprenant :
- un boîtier hémisphérique en polypropylène de 4 cm de diamètre et de 2 cm de hauteur,
- une solution alcoolique comportant une huile essentielle de lavandin qui représente 5% en poids de la composition, contenue dans un réservoir cylindrique en polypropylène de 3 mL de volume (diamètre 3 cm, hauteur 0,44 cm), le réservoir est pourvu d'un orifice de sortie,
- une mèche en cellulose dont le rôle est d'acheminer le liquide du réservoir vers la pastille piézoélectrique,
- un joint torique en caoutchouc nitrile permettant d'assurer l'étanchéité entre le réservoir et le boitier hémisphérique,
- une pastille en céramique piézoélectrique (PZT4 SMMOD10F190, Steminc) en contact avec la solution permettant de la nébuliser. La pastille piézoélectrique de forme torique (16 mm de diamètre externe, 3 mm de hauteur) est recouverte d'une membrane perforée (dimensions des perforations 3-20 µm sur une zone de 4 mm de diamètre). La pastille vibre à une fréquence de 110 kHz),
- une carte électronique de commande permettant d'activer manuellement la pastille piézoélectrique à l'aide d'un bouton poussoir permettant d'activer la pulvérisation, situé au centre de l'hémisphère du boîtier,
- une batterie alimentant le dispositif (29 x 19 x 5 mm) de 3.7V, 300 mAh et de puissance 1.11 Wh,
- un orifice de remplissage situé sur le boitier, et muni d'un bouchon flexible en silicone pour permettre le remplissage du réservoir en liquide actif,
- un connecteur muni d'un port USB permet le rechargement de la batterie,
- l'ensemble du dispositif qui vient d'être décrit est fixé sur un collier en nylon muni d'un moyen de fermeture de type collier-boucle comme du « velcro » ou « scratch » par exemple. Le dispositif est fixé afin de pulvériser la solution vers le bas, le réservoir de liquide pointant vers le haut,

Ce dispositif est conçu pour qu'en sortie de buse, se constitue un brouillard de matière active qui longe les parties basses du corps du porteur afin de protéger contre les infestations des parasites ciblés (tiques et puces). La carte du circuit électronique a été programmée afin de permettre l'activation de la pastille durant 20 secondes, pour un volume nébulisé d'environ 77µL. L'autonomie de la batterie permet de déclencher environ 100 activations avant rechargement total.

### Exemple 2 : Dispositif de diffusion d'actif anti-tiques et puces pour chien

On a réalisé un prototype de dispositif pour la diffusion de matière active répulsive contre les puces et tiques. Le dispositif est constitué par l'ensemble comprenant :
- un boîtier de la forme d'un pavé de 4 cm de largeur, 3,5 cm de hauteur et de 1,5 cm de profondeur, sur lequel une excroissance est présente afin d'y loger la pastille piézoélectrique (voir la Fig.1), ainsi qu'une gorge à l'intérieure de laquelle peut se loger un joint.
- une solution à base d'huile essentielle de mandarine et d'huile essentielle de citronnelle de Ceylan (50/50) aux propriétés répulsives contre les tiques et les puces, contenue dans un réservoir cylindrique en verre de 1,5 mL de volume (diamètre 1,1 cm, hauteur 3 cm), le réservoir est pourvu d'un orifice de sortie,
- une céramique piézoélectrique (PZT4 SMMOD10F190, Steminc) en contact avec la solution permettant de la nébuliser. La pastille piézoélectrique de forme torique (16 mm de diamètre externe, 3 mm de hauteur) est recouverte d'une membrane perforée (dimensions des perforations 3-20 µm sur une zone de 4 mm de diamètre). La pastille vibre à une fréquence de 110 kHz),
- une mèche en cellulose traitée hydrophobe de 6 mm de diamètre et 3,5 cm de hauteur dont le rôle est d'acheminer le mélange d'huiles essentielles du réservoir vers la pastille piézoélectrique,
- un joint torique en caoutchouc nitrile de 11 mm de diamètre permettant d'assurer l'étanchéité entre le réservoir et le boitier hémisphérique
- une carte électronique de commande permettant d'activer manuellement à distance le pilotage du système piézoélectrique à l'aide d'une télécommande permettant d'activer la pulvérisation, situé au centre de l'hémisphère du boîtier,
- une batterie alimentant le dispositif (29 x 19 x 5 mm) de 3.7V, 300 mAh et de puissance 1.11 Wh,
- un connecteur muni d'un port USB permet le rechargement de la batterie,
- l'ensemble du dispositif qui vient d'être décrit est fixé sur un collier en nylon muni d'un moyen de fermeture de type boucle.
- l'ensemble est placé sur le collier afin de nébuliser la solution vers le bas de l'animal. Ce dispositif est conçu et placé sur l'animal dans une orientation telle qu'en sortie de buse, se constitue un brouillard de matière active qui longe les parties basses de l'animal et protège ainsi le porteur contre les piqûres de puces ou de tiques. La carte du circuit électronique a été programmée afin de permettre l'activation de la pastille durant 4 secondes, pour un volume nébulisé d'environ 17 µL. L'autonomie de la batterie permet de déclencher environ 500 activations avant rechargement total.

### Exemple 3 : Dispositif de diffusion d'actif apaisant pour chat

On a réalisé un prototype de dispositif pour la diffusion d'une composition apaisante pour le chat. Le dispositif est constitué par l'ensemble comprenant :
- un boîtier de la forme d'un pavé de 4 cm de largeur, 3,5 cm de hauteur et de 1,5 cm de profondeur, sur lequel une excroissance est présente afin d'y loger la pastille piézoélectrique, ainsi qu'une gorge à l'intérieure de laquelle peut se loger un joint.
- une solution à base d'huile essentielle de nepeta cataria et d'huile essentielle de chanvre, riche en cannabinoides sans THC (50/50) aux propriétés apaisantes et anti douleur, diluée dans de l'éthanol à hauteur de 10% contenue dans un réservoir cylindrique en verre de 1,5 mL de volume (diamètre 1,1 cm, hauteur 3 cm), le réservoir est pourvu d'un orifice de sortie,
- une mèche en cellulose de 6 mm de diamètre et 3,5 cm de hauteur, présentant une extrémité de forme hémisphérique, dont le rôle est d'acheminer le mélange d'huiles essentielles du réservoir vers la pastille piézoélectrique,
- un joint torique en caoutchouc nitrile de 11 mm permettant d'assurer l'étanchéité entre le réservoir et le boitier hémisphérique
- une céramique piézoélectrique (PZT4 SMMOD10F190, Steminc) en contact avec la solution permettant de la nébuliser via la mèche hémisphérique. La pastille piézoélectrique de forme torique (16 mm de diamètre externe, 3 mm de hauteur) est recouverte d'une membrane perforée (dimensions des perforations 1-10 µm sur une zone de 4 mm de diamètre). La pastille vibre à une fréquence de 110 kHz),
- une carte électronique de commande permettant d'activer manuellement à distance le pilotage du système piézoélectrique à l'aide d'une télécommande permettant d'activer la pulvérisation, situé au centre de l'hémisphère du boîtier,
- une batterie alimentant le dispositif (29 x 19 x 5 mm) de 3.7V, 300 mAh et de puissance 1.11 Wh,
- un connecteur muni d'un port USB permet le rechargement de la batterie,
- l'ensemble du dispositif qui vient d'être décrit est fixé sur un collier en EVA muni d'un moyen de fermeture de type boucle,
- l'ensemble est placé sur le collier afin de nébuliser la solution vers le haut de l'animal.

Ce dispositif est conçu et placé sur l'animal dans une orientation telle qu'en sortie de buse, se constitue un brouillard de matière active qui est dirigé vers la sphère ORL du chat. La carte du circuit électronique a été programmée afin de permettre l'activation de la pastille durant 10 secondes, pour un volume nébulisé d'environ 38 µL. L'autonomie de la batterie permet de déclencher environ 200 activations avant rechargement total.

## Revendications

1. Collier pour un animal avec un dispositif rechargeable de pulvérisation d'un actif, le dispositif rechargeable de pulvérisation est fixé sur ou dans le collier ; le dispositif rechargeable de pulvérisation comprenant :
a. un réservoir (2) amovible contenant une mèche et au moins un actif,
b. un corps de nébulisation (1) contenant un mécanisme de pulvérisation piézoélectrique,
c. un joint (5) assurant l'étanchéité entre ledit réservoir (2) et ledit corps de nébulisation (1).

2. Collier selon la revendication 1 **caractérisé en ce que** le mécanisme de pulvérisation piézoélectrique comprend une pastille piézoélectrique (6) en contact avec l'actif, ladite pastille vibrant à une fréquence comprise entre 75 et 190 kHz et est recouverte d'une membrane perforée dont les dimensions des perforations sont comprises entre 1 et 40 µm.

3. Collier selon la revendication 2 **caractérisé en ce que** la pastille piézoélectrique (6) est en contact avec une mèche (4) dont l'extrémité est plane.

4. Collier selon la revendication 2 **caractérisé en ce que** la pastille piézoélectrique (6) est en contact avec une mèche (4') dont l'extrémité est hémisphérique.

5. Collier selon l'une des revendications 1 à 4 **caractérisé en ce que** le corps de nébulisation est équipé d'un système d'orientation (7) du mécanisme de pulvérisation piézoélectrique.

6. Collier selon les revendications 1 à 5 **caractérisé en ce que** l'actif est un actif insecticide, répulsif, anti-douleur, apaisant, antibactérien ou antiseptique.

7. Collier selon l'une des revendications 1 à 6 **caractérisée en ce que** l'actif représente 0,01 % à 100 % en masse d'une composition liquide.

8. Collier selon la revendication 7 **caractérisé en ce que** la composition liquide est pulvérisée sous forme de particules de diamètre moyen compris entre 1µm et 40µm.

9. Utilisation d'un dispositif rechargeable de pulvérisation d'un actif selon l'une des revendications 1 à 8 **caractérisée en ce que** le dispositif est utilisable de façon multidirectionnelle et indépendamment des mouvements de l'animal.

10. Utilisation d'un collier pour un animal avec un dispositif rechargeable de pulvérisation d'un actif selon l'une des revendications 1 à 8 **caractérisée en ce que** le dispositif permet de pulvériser l'actif de façon localisée sur une zone cible de l'animal.

11. Utilisation selon l'une des revendications 9 ou 10 **caractérisée en ce que** le dispositif équipé d'un mécanisme de pulvérisation piézo-électrique permet de pulvériser de façon contrôlée et à distance l'actif.

12. Utilisation selon l'une des revendications 9 à 11 **caractérisée en ce que** la pulvérisation a pour cible la sphère Otho-Rhino-Laryngée de l'animal.

13. Utilisation selon l'une des revendications 9 à 12 **caractérisée en ce que** la pulvérisation a pour cible le dos, le ventre, le poitrail, les pattes ou les flancs de l'animal.

## Patentansprüche

1. Halsband für ein Tier mit einer nachfüllbaren Vorrichtung zum Zerstäuben eines Wirkstoffs, wobei die nachfüllbare Zerstäubungsvorrichtung an oder in dem Halsband befestigt ist;
die nachfüllbare Zerstäubungsvorrichtung umfassend:
a. einen abnehmbaren Behälter (2), der einen Docht und mindestens einen Wirkstoff enthält,
b. einen Vernebelungskörper (1), der einen piezoelektrischen Zerstäubungsmechanismus enthält,
c. eine Dichtung (5), die die Dichtheit zwischen dem Behälter (2) und dem Vernebelungskörper (1) gewährleistet.

2. Halsband nach Anspruch 1, **dadurch gekennzeichnet, dass** der piezoelektrische Zerstäubungsmechanismus ein piezoelektrisches Plättchen (6) in Kontakt mit dem Wirkstoff umfasst, wobei das Plättchen mit einer Frequenz zwischen 75 und 190 kHz schwingt und mit einer perforierten Membran bedeckt ist, deren Perforationsabmessungen zwischen 1 und 40 µm betragen.

3. Halsband nach Anspruch 2, **dadurch gekennzeichnet, dass** das piezoelektrische Plättchen (6) mit einem Docht (4) in Kontakt ist, dessen Ende eben ist.

4. Halsband nach Anspruch 2, **dadurch gekennzeichnet, dass** das piezoelektrische Plättchen (6) mit einem Docht (4) in Kontakt ist, dessen Ende halbkugelförmig ist.

5. Halsband nach einem der Ansprüche 1 bis 4,
**dadurch gekennzeichnet, dass** der Vernebelungskörper mit einem Ausrichtungssystem (7) des piezoelektrischen Zerstäubungsmechanismus ausgestattet ist.

6. Halsband nach einem der Ansprüche 1 bis 5,
**dadurch gekennzeichnet, dass** der Wirkstoff ein Insektizid-, Abwehr-, Schmerz-, beruhigender, antibakterieller oder antiseptischer Wirkstoff ist.

7. Halsband nach einem der Ansprüche 1 bis 6,
**dadurch gekennzeichnet, dass** der Wirkstoff zu 0,01 Gew.-% bis 100 Gew.-% eine flüssige Zusammensetzung ausmacht.

8. Halsband nach Anspruch 7, **dadurch gekennzeichnet, dass** die flüssige Zusammensetzung in Form von Partikeln mit einem mittleren Durchmesser zwischen 1 µm und 40 µm zerstäubt wird.

9. Verwendung einer nachfüllbaren Vorrichtung zum Zerstäuben eines Wirkstoffs nach einem der Ansprüche 1 bis 8, **dadurch gekennzeichnet, dass** die Vorrichtung multidirektional und unabhängig von Bewegungen des Tieres verwendbar ist.

10. Verwendung eines Halsbandes für ein Tier mit einer nachfüllbaren Vorrichtung zum Zerstäuben eines Wirkstoffs nach einem der Ansprüche 1 bis 8, **dadurch gekennzeichnet, dass** die Vorrichtung es ermöglicht, den Wirkstoff lokalisiert auf einem Zielbereich des Tieres zu zerstäuben.

11. Verwendung nach einem der Ansprüche 9 oder 10,
**dadurch gekennzeichnet, dass** die mit einem piezoelektrischen Zerstäubungsmechanismus ausgestattete Vorrichtung es ermöglicht, den Wirkstoff gesteuert und in einem Abstand zu zerstäuben.

12. Verwendung nach einem der Ansprüche 9 bis 11,
**dadurch gekennzeichnet, dass** das Zerstäuben den Hals-Nasen-Ohren-Bereich des Tieres zum Ziel hat.

13. Verwendung nach einem der Ansprüche 9 bis 12,
**dadurch gekennzeichnet, dass** das Zerstäuben den Rücken, den Bauch, die Brust, die Pfoten oder die Flanken des Tieres zum Ziel hat.

## Claims

1. A collar for an animal equipped with a refillable device for spraying an active substance, wherein the refillable spraying device is attached to or in the collar, and the refillable spraying device comprises:
a. a removable reservoir (2) containing a wick and at least one active substance,
b. a nebulizing body (1) containing a piezoelectric spraying mechanism,
c. a seal (5) ensuring the tightness between said reservoir (2) and said nebulizing body (1).

2. The collar according to claim 1, wherein the piezoelectric spraying mechanism comprises a piezoelectric pad (6) which is in contact with the active substance, said pad vibrating at a frequency of between 75 and 190 kHz, and is covered with a perforated membrane, of which the perforation dimensions are between 1 and 40 µm.

3. The collar according to claim 2, wherein the piezoelectric pad (6) is in contact with a wick (4), the end of which is planar.

4. The collar according to claim 2, wherein the piezoelectric pad (6) is in contact with a wick (4'), the end of which is hemispherical.

5. The collar according to any one of claims 1 to 4, wherein nebulizing body (1) is equipped with an orientation system (7) of the piezoelectric spraying mechanism.

6. The collar according to claims 1 to 5, wherein the active substance is an insecticidal, repellant, painkiller, soothing, antibacterial or antiseptic.

7. The collar according to any one of claims 1 to 6, wherein the active substance represents 0.01% to 100% by weight of a liquid composition.

8. The collar according to claim 7, wherein the liquid composition is sprayed in the form of particles with an average diameter of between 1 µm and 40 µm.

9. A use of a refillable device for spraying an active substance according to any one of claims 1 to 8, wherein the device can be used in a multidirectional manner and independently of the movements of the animal.

10. The use of a collar for an animal with a refillable device for spraying an active substance according to any one of claims 1 to 8, wherein the device makes it possible to spray the active substance in a localized manner on a target zone of the animal.

11. The use according to claim 9 or 10, wherein the device equipped with a piezoelectric spraying mechanism makes it possible to spray the active substance in a controlled and remote manner.

12. The use according to any one of claims 9 to 11, wherein the spraying targets the ear-nose-and-throat sphere of the animal.

13. The use according to any one of claims 9 to 12, wherein the spraying targets the back, stomach, chest, legs or flanks of the animal.
